# FASCICULE DE BREVET EUROPEEN

(11) **EP 1 393 037 B1**
(45) Date de publication et mention de la délivrance du brevet: **21.04.2010**
(21) Numéro de dépôt: 02750874.6
(22) Date de dépôt: 02.05.2002
(51) Int. Cl.: G01M 17/02

(54) **PROCEDE ET DISPOSITIF POUR TEST DE DECOINCAGE DE PNEUMATIQUE**
VERFAHREN UND VORRICHTUNG ZUR PRÜFUNG DES ABLÖSENS EINES REIFENS VOM FELGEN
METHOD AND DEVICE FOR TYRE BEAD UNSEATING TEST

(30) Priorité: 03.05.2001 FR 0105948
(43) Date de publication de la demande: 03.03.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: DEVERRE, Luc, F-63360 GERZAT (FR); KELLER, Jean-Luc, F-63430 Pont du Chateau (FR); RACHEZ, Patrick, F-63112 BLANZAT (FR)
(74) Mandataire: Bauvir, Jacques
(86) Numéro de dépôt international: PCT/EP2002/004809
(87) Numéro de publication internationale: WO 2002/090919

(56) Documents cités:
- DE-B- 1 248 336
- US-A- 2 695 520
- US-A- 3 662 597

## Description

La présente invention concerne le secteur technique des ensembles roulants comprenant essentiellement, pour ce qui concerne le cadre de la présente invention, un pneumatique et une jante.

Plus précisément, l'invention concerne les méthodes ou procédés, et dispositifs, d'essais ou « tests » permettant d'étudier le comportement d'un tel ensemble, dans diverses conditions de roulage, face au phénomène dit de « décoincement » du talon (encore dénommé « bourrelet ») » ou « décoinçage » (qui correspond à la sortie du talon (ou bourrelet) du pneumatique hors de tout ou partie de la « portée » dudit talon ou bourrelet sur la jante, entraînant une perte immédiate d'étanchéité et donc une baisse brutale de la pression de gonflage du pneumatique, accompagnée en général de déformations dramatiques du pneumatique).

Le problème général posé est donc celui de la prévention du décoinçage accidentel d'un pneumatique dans certaines conditions.

On distingue deux sortes de décoinçages, la première résultant de certaines conditions de roulage, par exemple en cas de choc violent sur le flanc et / ou la bande de roulement du pneumatique, comme choc sur un bord de trottoir, un « îlot » de circulation, ou un trou dans le revêtement de la chaussée.
Ces causes de décoinçages ne sont pas concernées, a priori, par la présente invention.

La seconde cause de décoinçage provient par exemple de roulage dans une ornière dans un sol meuble, etc..., ou en présence de contraintes mécaniques très fortes s'exerçant sur le flanc et / ou la bande de roulement, par exemple en cas de virage serré à vitesse élevée, le tout éventuellement aggravé par une pression de gonflage ne correspondant pas à la pression de service, ou facteurs aggravants de ce genre. L'invention concerne les décoinçages occasionnés par ce second type de causes.

La prévention du décoinçage passe par une meilleure compréhension du comportement de l'ensemble roulant sous certaines contraintes, ce qui aide ensuite à la conception de profils améliorés de jantes, pneumatiques, et éléments analogues.

Cette meilleure compréhension est à son tour aidée par des machines de tests (ou « essais », ci après dans toute la présente demande « test » qui est le vocable utilisé par l'homme de métier).

Le problème précis posé à l'homme de métier est donc ici de concevoir une méthode et une machine de test améliorée, c'est-à-dire permettant d'affiner la compréhension des phénomènes de décoinçage de pneumatique, et donc d'y apporter ensuite de meilleures solutions techniques.

Naturellement, un aspect important du problème posé réside dans la capacité, pour la méthode et la machine, d'être capables de mettre en oeuvre des tests sur une gamme de simulation de conditions de roulages aussi large et diversifiée que possible, et également capable de s'adapter à différentes tailles de pneumatiques.

Un aspect encore plus important du problème posé réside dans la nécessité de réaliser une excellente corrélation entre les résultats d'essais sur machine et les essais sur piste, et enfin les essais réels sur route, par exemple en rallye ou situations extrêmes analogues, de manière générale avec le « test véhicule ».

On connaît le brevet USP 3,662,597 qui décrit une machine pour essai de pneumatique, capable de réaliser aussi bien des essais de décoinçage du bourrelet d'avec la portée du talon sur la jante (« rim bead seat ») que des essais de nature et de conception totalement différentes de résistance mécanique.

Ce brevet souligne que de telles machines doivent être construites avec précision, car d'une part elles exercent des pressions considérables, selon des mouvements complexes, tandis que d'autre part la validité du test dépend naturellement de la précision de l'effort imposé par la machine, et de la résistance de celle - ci à la « distorsion ». Les problèmes évoqués ci-dessus n'en sont qu'amplifiés, les machines sont très coûteuses, et l'on va rechercher la conception d'une machine multi-usages.

Il convient de plus d'éviter tout facteur qui viendrait fausser le résultat et / ou l'interprétation de l'essai, et notamment tout fléchissement, sous les forces appliquées, des bâtis et autres supports de roue ou d'ensemble monté : on doit donc prévoir des surdimensionnements coûteux de telles pièces, dans ce domaine en particulier.

Selon ce brevet, le pneumatique est monté sur la jante, puis celle-ci est boulonnée sur son support. Une forme conique, dont le bras est ajustable en longueur afin de s'adapter à différents pneumatiques, vient au contact du flanc du pneumatique, et on fait tourner manuellement le pneumatique jusqu'à ce que la partie inférieure conique de ladite forme soit en contact correct avec le flanc.

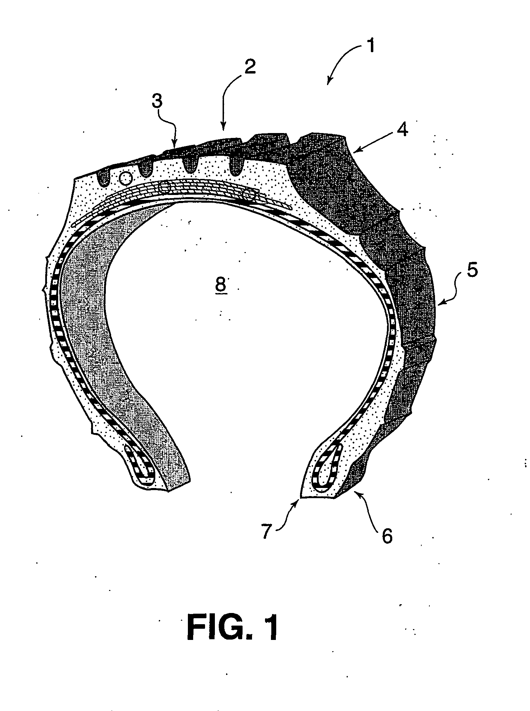

On applique ensuite par un moyen hydraulique une pression contre le flanc du pneumatique (figures 1-5).

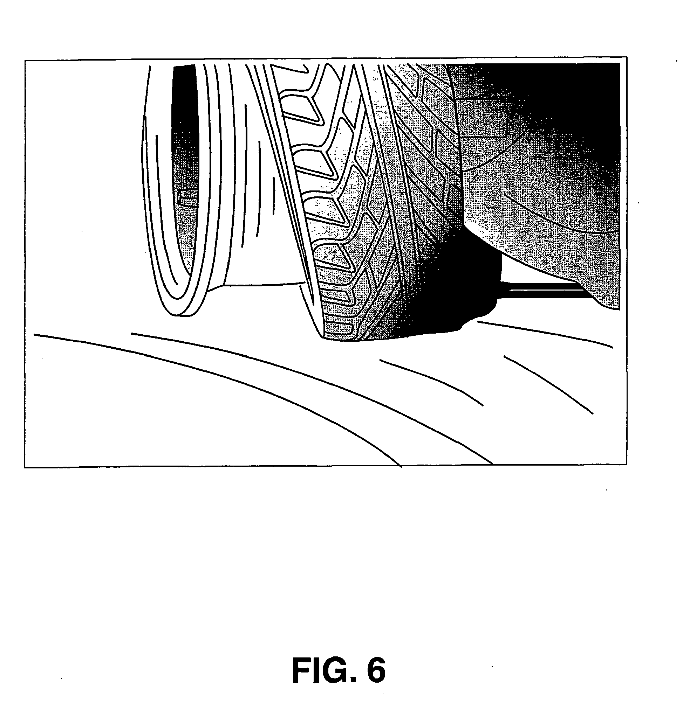

Une autre disposition des moyens de la machine permet (figure 6) de réaliser un test totalement différent de résistance à la rupture mécanique du « sommet » du pneumatique en appliquant la pression par un indenteur (« plunger ») sur la bande de roulement du pneumatique.

L'homme de métier comprendra que dans ce cas d'essai de résistance à la rupture du sommet du pneumatique, il s'agit d'appliquer, non pas une force visant à étudier la déformation « latérale » du pneumatique mais un « choc » violent sur une très petite surface du sommet, visant à détruire mécaniquement le sommet du pneumatique.

La présente invention concerne de manière générale des procédés et machines pour test ou essai de décoinçage d'un ensemble monté (c'est-à-dire un ensemble formé d'une jante, d'un pneumatique sans chambre (« tubeless »), et de l'air de gonflage de la cavité interne du pneumatique à la pression de service ou une autre pression, notamment une pression d'essai) **caractérisés en ce qu**'ils ne transmettent, sur machine, les efforts d'essai (ou « de charge ») que selon une direction dénommée ici « normale » par simplicité, c'est-à-dire par la partie du pneumatique destinée à être en contact avec le sol, c'est-à-dire en conditions normales le « sommet » du pneumatique (sensiblement la bande de roulement) et, en conditions extrêmes d'essai , le sommet , 1' « épaule » et ultimement le « flanc » du pneumatique.

L'homme de métier connaît naturellement ces dénominations qui font partie de son vocabulaire professionnel courant. On a néanmoins représenté sur la **figure 1** annexée un pneumatique et porté ces dénominations en référence, pour une meilleure compréhension.

Le principe général de l'invention - procédé et machine d'essai - est donc d'appliquer les efforts d'essai ou « de charge » selon une direction dite «normale », selon la convention défmie ci-dessus.

On soulignera que « normale » ne signifie pas obligatoirement « perpendiculaire à la bande de roulement », par exemple, mais uniquement le fait que les efforts de charge sont appliqués sur les parties du pneumatique précisées plus haut. Par « normale », on entend opposer l'invention au principe de l'art antérieur, qui était d'appliquer un effort « transversal » sur le flanc (cf. USP précité). On aura donc compris qu'un « effort normal » selon l'invention peut être appliqué selon un direction oblique, comme cela sera décrit en détail ci-dessous.

On notera que, dans certaines conditions ultimes d'essai, le pneumatique peut ne plus être en contact que par le flanc, l'étanchéité étant encore toutefois assurée - fugacement - par la pointe du talon du pneumatique. On est en situation de « décollement » mais pas encore de décoinçage.

L'industrie utilise au contraire des procédés qui transmettent l'effort d'essai par le flanc du pneumatique, comme cela est parfaitement illustré par le brevet USP ci-dessus. On notera encore que le fait que, selon l'invention, l'essai par « effort normal » puisse conduire le pneumatique, dans la phase tout à fait ultime de l'essai, à être en contact avec le sol par le flanc ne doit en aucune manière être confondu avec les essais de rupture mécanique du sommet, où les efforts sont transmis directement et volontairement sur le flanc. Selon l'invention, si le flanc vient en contact avec la surface d'essai, ce n'est que la *conséquence* de certaines situations d'essai, conduisant à une déformation extrême, en phase ultime de l'essai, dite de décollement, et non pas la *méthode* d'essai.

L'invention concerne également les machines d'essai permettant de, ou adaptées pour, mettre en oeuvre lesdits procédés.

Par simplicité, ce qui sera indiqué pour les « procédés » ne sera pas inutilement dupliqué pour les « machines », dans toute la présente demande, y compris les revendications, sauf cas particuliers nécessaires à la clarté ou à une bonne compréhension. Ainsi, si un « procédé » est décrit et revendiqué comme comportant un « moyen de compression », l'homme de métier comprendra que l'invention couvre la machine d'essais comportant un tel moyen de compression, dans les conditions décrites en relation avec le « procédé ».

Il a été découvert et mis au point deux types particuliers de procédés basés sur ce principe général dit « d'effort normal » : l'un statique (le pneu ne tourne pas) ; l'autre quasi-statique (le pneu tourne sur un volant).

Dans les deux cas, on exerce une charge (ou effort) sur la bande de roulement du pneumatique gonflé à sa pression de service ou à une autre pression de test, jusqu'à ce que se produise le début du décoinçage du pneumatique, au niveau du bourrelet; on note ou relève à ce moment l'effort appliqué et la pression interne du pneumatique.

Comme précisé plus haut, le pneumatique peut, juste avant ce moment, être tellement déformé par la charge que, en fait, l'épaule ou même le flanc sont fugacement en contact avec la surface d'essai. dans ce qui suit, on utilisera « bande de roulement » par simplicité, et aussi parce que le principe de l'essai selon l'invention est d'appliquer l'effort de charge normal, essentiellement, et durant la plus grande partie de l'essai, sur ladite bande.

On procède ainsi pour diverses conditions d'essais, notamment diverses pressions ou autres configurations.

Le début de décoinçage peut être détecté par le sifflement audible de l'air qui s'échappe de la cavité interne du pneumatique. On peut aussi disposer des capteurs de pression de gonflage. Naturellement, on peut aussi enregistrer en continu, et y compris au delà du point de début de décoinçage, l'effort appliqué (en général en abscisses) et la pression de gonflage (généralement en ordonnées) c'est-à-dire la pression de la cavité interne du pneumatique.

### Conventions

Dans toute la présente demande, on considérera par simple convention et commodité que :
- dans le mode statique, la surface ou plaque est sous la roue, et le vérin éventuel se trouve au dessus de la roue, le tout dans l'axe vertical,
- dans le mode quasi statique, le volant ou la surface de roulement se trouve sous la roue,
- les axes de rotation et moyeux sont horizontaux, sauf mention contraire (par exemple sauf angle de carrossage lorsque mentionné).

L'homme de métier comprendra que l'invention couvre également, sans qu'il soit besoin de le décrire, les modes inversés ou disposés selon diverses inclinaisons relatives de l'ensemble monté et des pièces d'application de l'effort « normal », pouvant correspondre à des applications particulières et à des mesures spécifiques.

De même, on a défini « effort normal » et « normal » ci-dessus par convention, ainsi que « bande de roulement ».

### Mode statique

L'invention concerne de manière plus spécifique mais non limitative un premier mode de réalisation dit « procédé statique » **caractérisé en ce que** l'ensemble roulant est disposé sur une surface d'essai et subit un effort « normal » d'essai, sur le sommet de la bande de roulement, par au moins un moyen de pression ou compression (ci après par simplicité « moyen de compression »).

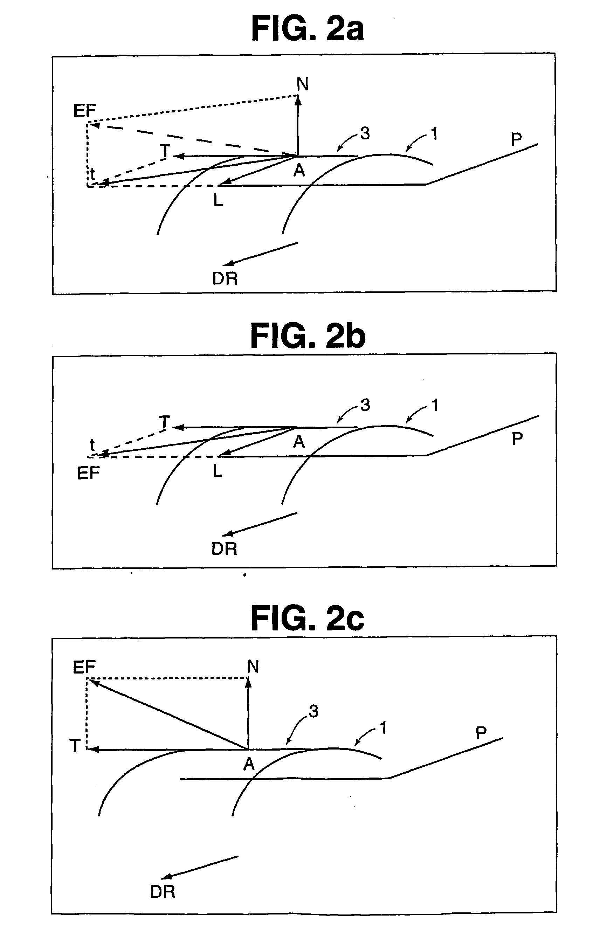

Par « effort normal d'essai, sur le sommet de la bande de roulement » on entend ici (cf. **figure 2** annexée) que l'effort s'exercera sur le sommet de la bande de roulement et présente au moins une composante tangentielle **t** non nulle.

Comme on le voit sur la figure 2, l'effort « normal » EF selon l'invention est, dans un but de représentation schématique simplifiée que l'homme de métier saura interpréter, supposé appliqué en un point A de la bande de roulement. Il est possible de définir trois composantes de cet effort normal EF, qui sont :
- la composante longitudinale **L** (parallèle à la direction de roulement DR, donc « horizontale » selon les conventions ci-dessus, et tangente en A à la bande de roulement),
- la composante transversale **T** (perpendiculaire à la composante **L**, et tangente en A à la bande de roulement, donc également horizontale), les composantes L et T définissant donc un plan P « horizontal » (selon les conventions ci-dessus) et tangent en A à la bande de roulement 3, et
- la composante normale **N** perpendiculaire en A à ce plan.

La résultante de ces trois composantes, dont on verra ci-dessous les modulations possibles, forme le vecteur de l'effort « normal » **EF.**

Comme expliqué ci-dessus, la notion d'effort « normal » est une convention qui signifie que l'effort de charge est appliqué selon l'invention sur le sommet du pneumatique. Par contre, l'invention présente comme caractéristique essentielle d'appliquer un effort de charge EF qui présente au moins une composante tangentielle **t** non nulle alors que la composante normale N peut être nulle selon l'invention (figure 2b). On ne devra donc pas confondre « effort normal » (EF) et « composante normale » (N).

Bien que l'invention comprenne le cas particulier où la composante normale N est nulle, figure 2b, ceci correspond à une situation dans laquelle, comme le comprendra l'homme de métier, le pneumatique 1 serait collé sur la surface d'essai, ce qui correspond à un coefficient de frottement pneumatique/surface d'essai rendu artificiellement infini. Ce n'est donc pas le cas qui sera privilégié, mais il n'est pas exclu selon l'invention.

Selon une variante de l'invention, la composante tangentielle **t** se confond, les composantes longitudinale L et normale N étant nulles, avec la composante transversale T.

A noter que « composante transversale T » ne doit pas être confondu avec la technologie antérieure, représentée par exemple par le brevet USP précité, où l'effort d'essai est appliqué transversalement mais sur le flanc du pneumatique. Selon l'invention, la composante transversale est appliquée sur le sommet de la bande de roulement, ce qui est fondamentalement différent.

Selon une variante de l'invention, la composante longitudinale n'est pas nulle et, pour éviter le roulement de la roue, on prévoit d'appliquer sur la roue et/ou son moyeu un couple moteur ou freineur, par un moyen connu comme un moteur, un frein, et analogues, qu'il est inutile de décrire.

Selon une variante préférée de l'invention, la composante normale N n'est pas nulle.

Selon un mode de réalisation préféré, la composante longitudinale L est nulle, l'effort de charge (figure 2c) ne comporte pas de composante longitudinale et comporte seulement une composante normale et une composante transversale, l'effort normal EF résultant se trouvant donc dans un plan perpendiculaire au plan P et à la direction de roulement DR.

L'homme de métier saura envisager ces variantes et leurs conséquences, avantages, et champs d'application particuliers. L'ensemble sera regroupé par simplicité dans le vocable « effort normal d'essai, sur la bande de roulement », ou vocable analogue.

Selon l'invention, l'effort de charge EF peut être appliqué sur le sommet du pneumatique par tout moyen, dénommé plus haut par convention « moyen de compression », c'est-à-dire par le moyen d'un effort contrôlé appliqué sur la surface d'essai, par le moyen d'un effort contrôlé appliqué sur le moyeu de l'ensemble monté subissant l'essai, par le moyen d'un effort contrôlé appliqué par un dispositif agissant directement sur le sommet de la bande de roulement, et par des combinaisons diverses de ces moyens.

L'homme de métier saura envisager sans difficulté lesdites combinaisons en fonction du vecteur résultant EF qu'il souhaitera créer en fonction du cahier des charges de l'essai à réaliser.

La surface d'essai est quelconque, et notamment soit solide (rigide ou non rigide) soit fluide (plaque à film d'air ou de gaz). On pourra utiliser une « plaque à billes ».

Elle peut être concave, convexe, ou de forme complexe et/ou évolutive, afin de s'adapter à des conditions particulières d'essais. On pourra ainsi employer une surface d'essai dont la géométrie simulera ou reproduira l'empreinte d'un pneumatique dont la bande de roulement présente une tendance à « cloquer ».

Selon un mode de réalisation préféré, ce procédé comporte l'utilisation comme surface d'une plaque augmentant le coefficient de frottement entre la bande de roulement du pneumatique et ladite surface, par rapport à une surface lisse, pour accroître le niveau d'effort « Y » transmissible.

Selon un mode de réalisation préféré, ladite plaque est crantée, c'est-à-dire comporte des rainures ou crans sensiblement parallèles entre eux, les gorges étant de préférence disposées parallèlement au sens « de roulement » (si le pneumatique roulait).

Selon une variante, on utilise une plaque à picots, mais cette solution est moins avantageuse.

Dans les deux cas, le but est d'obtenir un effet d'indentation mécanique qui permet d'augmenter le coefficient de frottement de la bande de roulement sur ladite plaque, et donc de repousser la contrainte ou effort au delà duquel le pneumatique va « riper » ; l'emploi de telles surfaces indentées augmente donc la plage d'utilisation de la machine, mais n'est pas obligatoire, et l'emploi d'une surface lisse est possible. Il est cependant préféré d'employer des surfaces indentées ou autrement rugueuses.

Lesdits moyens de compression sont **caractérisés en ce que** ils sont choisis parmi les combinaisons suivantes :
A le moyeu de la roue est monté fixe sur un bâti rigide extérieur à la roue, et la compression est obtenue par l'effort exercé par un « mouvement adapté » de ladite surface ou plaque sur la bande de roulement (c'est-à-dire sur l'aire de contact du pneumatique sur ladite surface ou plaque).
   Par « mouvement adapté », on désignera par simplicité le mouvement (et donc la force provoquant ce mouvement) conçue et contrôlée pour appliquer sur la bande de roulement l'effort normal souhaité (c'est-à-dire souhaité en intensité et orientation spatiale, vecteur EF). On comprendra que le vecteur VF peut être obtenu par la combinaison de plusieurs forces et mouvements, relatifs ou non, et que « mouvement adapté » couvre également de telles situations. Il est rappelé que, selon la caractéristique essentielle de l'invention, ledit « mouvement adapté » comporte toujours au moins une composante tangentielle **t**, qui peut éventuellement être réduite à une composante transversale T, sans qu'il soit nécessaire de le rappeler à chaque occasion. Ainsi, par exemple, la mention d' un « mouvement adapté » ou déplacement, et autres vocables similaires, « vers le bas » signifie implicitement « mouvement adapté (ou déplacement) vers le bas comportant au moins une composante tangentielle **t** ».
B le moyeu de la roue est monté mobile dans des glissières latérales dans lesquelles ses extrémités peuvent glisser sous l'effet d'une action latérale extérieure, et les glissières présentent une pente ajustable qui impose au moyeu, du fait de son déplacement latéral forcé, un « mouvement adapté », c'est-à-dire ici un déplacement horizontal et vers le bas (c'est-à-dire vers la surface ou plaque) ou, dans le mouvement inverse, vers le haut, l'effort de charge augmentant dans le premier cas et diminuant dans le second.
C le moyeu de la roue est monté mobile verticalement, la surface ou plaque est fixe, et le moyeu peut être forcé - par une action extérieure - selon un « mouvement adapté » vers le bas (vers la surface ou la plaque) ou inversement vers le haut, la charge augmentant dans le premier cas et diminuant dans le second.
D l'effort de compression est appliqué sur le sommet du pneumatique opposé à la surface ou plaque, par un moyen de compression comportant une pièce appropriée d'appui sur la bande de roulement, et le moyeu de la roue est monté libre verticalement, alors que la surface ou plaque est fixe, ce qui permet au pneumatique de subir un écrasement sous l'effet du « mouvement adapté » de ladite pièce, ou inversement un relâchement.
E l'effort de compression est appliqué sur le sommet du pneumatique sous essai par un second pneumatique monté sous le pneumatique sous essai, lequel second pneumatique est animé d'un « mouvement adapté ».
F selon une variante de l'essai E, on peut envisager de mener le test avec deux pneumatiques sous essai superposés, en contact par leurs bandes de roulement respectives.
   Il est important de noter que, dans le mode statique considéré ici, le second pneumatique exerçant l'effort de compression ne roule pas (contrairement au « volant » qui sera décrit ci-dessous pour le mode « dynamique ») : ledit second pneumatique est animé d'un « mouvement adapté » et ne doit pas être confondu avec le « volant » du mode dynamique qui, lui, roule.
G on combine les options ci dessus entre elles, notamment :
   G1 B (glissières) et A (mouvement de la surface ou plaque)
   G2 A (mouvement de la plaque) et D (vérin), le moyeu étant fixe ou libre en déplacement vertical.
   G3 toutes autres combinaisons et variantes qui apparaîtront clairement à l'homme de métier, et de manière préférée en recherchant une synchronisation des mouvements relatifs afin d'obtenir la rampe de charge souhaitée.

Les différents « mouvements adaptés » qui viennent d'être décrits aussi bien à titre de principe général que par le moyen de quelques exemples non limitatifs sont obtenus par tous moyens mécaniques, hydrauliques, électromagnétiques, comme un ou des moteurs, vérins, cames, de type connu, seuls ou en combinaisons diverses appropriées pour obtenir le vecteur EF souhaité.

Comme indiqué plus haut, lorsque le « mouvement adapté » comporte une composante longitudinale non nulle pour les besoins de l'essai, on utilisera de plus des moyens permettant d'empêcher la roue de rouler, c'est-à-dire des moyens capables d'appliquer un couple freineur ou (selon, bien entendu, le sens de l'application de ce couple), moteur

Naturellement, ces moyens sont commandés ou pilotés par un programme et un ou des interfaces en fonction du cahier des charges précis de l'essai à réaliser, et notamment de l'intensité et la direction du vecteur EF, et éventuellement de sa modulation dans le temps, en intensité et/ou direction.

En particulier, les mouvements adaptés de la plaque ou du moyeu seront de préférence obtenus par un ou plusieurs vérins.

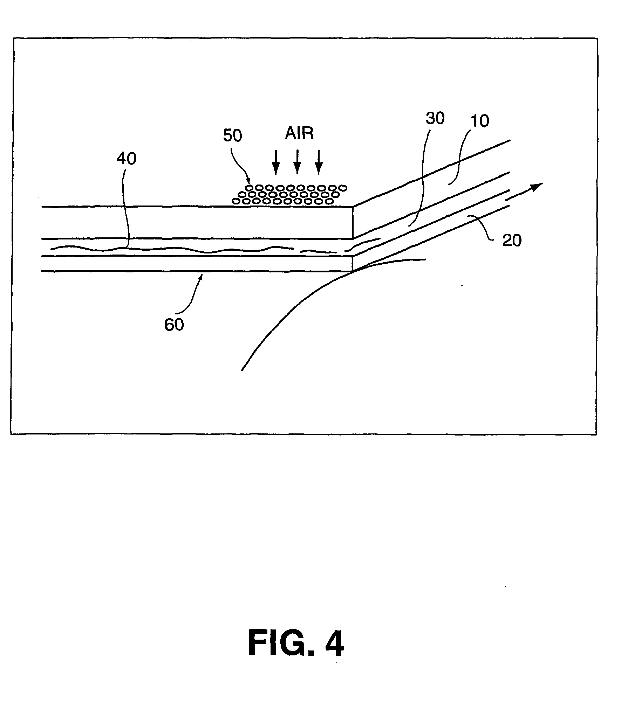

La pièce d'appui exerçant (variante D) un effort de compression sur le sommet de la bande de roulement opposée à ladite plaque pourra être formée par un second pneumatique, ou une pièce plane ou de concavité adaptée pour épouser la forme du pneumatique, notamment une plaque « à film tendu d'air » qui sera décrite en détail ci-dessous et sur la figure 4, et sera commandée par un ou plusieurs vérins ou autres moyens appropriés.

Enfin, l'homme de métier aura compris que les divers éléments tels que les plaques ou supports de moyeux etc.... sont maintenus par des éléments extrêmement rigide comportant des capteurs ou jauges de contrainte diverse et connus.

### Mode Dynamique :

Selon ce mode de mise en oeuvre particulier du procédé selon l'invention à effort normal appliqué sur la bande de roulement, on fait rouler l'ensemble roulant sur une surface de référence, en imposant une dérive d par rapport à ladite surface de référence, et on applique l'effort normal tel que décrit pour le mode statique.

### Option « volant »

Selon un mode de réalisation préféré de ce mode de réalisation, on positionne l'ensemble roulant sur un « volant » qui consiste en un cylindre entraîné en rotation et dont la fonction principale est d'entraîner le pneumatique en rotation, du fait de sa propre rotation, par le jeu des forces de frottement et de servir de surface de référence pour l'application du « mouvement adapté ».

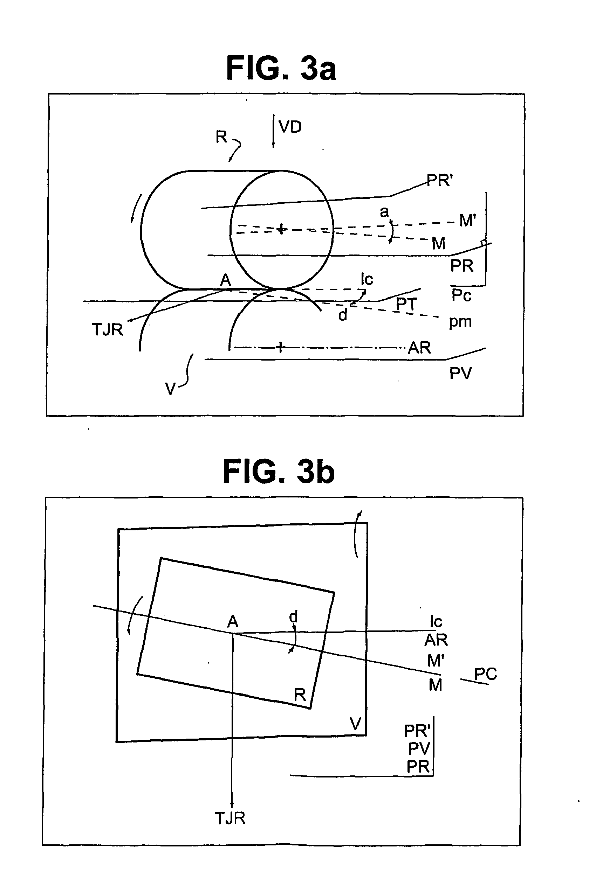

On se réfèrera avantageusement à la figure 3 annexée.

La figure 3a illustre ledit positionnement et permet de préciser les paramètres géométriques.

La figure 3b est une vue de dessus (projection) de la figure 3a sur un plan horizontal, selon la direction VD (flèche) indiquée sur la figure 3 a.

Sur ces deux figures, on voit que l'ensemble roulant R est positionné au dessus du volant V.

On ne rappellera ici que brièvement les conventions ci-dessus, et les possibilités évidentes de modifier ces conventions.

L'axe de rotation AR du volant se trouve dans un plan PV parallèle au plan PR dans lequel se trouve le moyeu M de l'ensemble roulant R.

Ledit « mouvement adapté » (tel que déjà défini en détail dans le mode statique), peut être appliqué soit uniquement par le volant, soit par l'ensemble roulant et le volant, soit par un moyen de compression additionnel comme une plaque, et par des combinaisons de ces moyens. On se réfèrera ici par analogie aux options et combinaisons décrites en détail pour le mode statique, *mutatis mutandis.*

Dans cette option « volant » on peut donc effectuer l'essai avec :
- un ensemble roulant R monté sur un bâti extérieur fixe rigide, le volant appliquant le « mouvement adapté »,
- un volant monté sur un bâti extérieur rigide fixe, le mouvement adapté étant appliqué par action de forces sur le moyeu de l'ensemble roulant,
- un volant et un ensemble roulant montés chacun sur un bâti extérieur mobile, chacun exerçant au moins une composante, ou une partie de composante, du vecteur d'effort EF,
- un volant et un ensemble roulant montés chacun sur un bâti extérieur mobile ou fixe, et une plaque exerçant un effort de charge sur le sommet du pneumatique sous essai,
- un volant et un ensemble roulant montés chacun sur un bâti extérieur mobile ou fixe, et une moyen extérieur exerçant un effort de charge sur le moyeu de l'ensemble roulant sous essai et/ou sur l'axe de rotation du volant,
- un volant et un ensemble roulant montés chacun sur un bâti extérieur mobile ou fixe, et un second volant, opposé au premier par rapport à l'ensemble roulant, exerçant un effort de charge sur le sommet du pneumatique sous essai,
et leurs combinaisons.

### Option « plaque »

Toujours en mode dynamique, on peut remplacer le volant par une surface plane ou courbe sur laquelle on fait rouler l'ensemble roulant.

Un exemple de telle plaque est représenté sur la figure 4 annexée. Cette plaque est formée d'une première plaque 10 fixe et microperforée (supérieure, dans la convention utilisée), comportant un très grand nombre de microperforations 50 dans lesquelles on injecte de l'air (ou un gaz inerte) sous pression, et d'une second plaque pleine 20, qui est mobile en défilement et est au contact du pneumatique 1 par la ligne de contact 60, les deux plaques 10 et 20 étant montées de telle sorte qu'il subsiste un intervalle 30 entre elles, où peut s'établir un « film tendu » d'air.

On peut ainsi exercer sur le sommet de la bande de roulement du pneumatique 1 une pression grâce à la pression de l'air, qui se transmet à la plaque 20 par le film tendu, ce qui réalise le « mouvement adapté » recherché, tout en réalisant un roulage du pneumatique sur la face inférieure de la plaque 20.

On peut également prévoir un simple roulage de l'ensemble roulant sur une plaque.

On pourra aussi combiner une plaque de roulage simple et une plaque à film tendu d'air destinée à appliquer le « mouvement adapté ».

On reviendra dans ce qui suit indifféremment à l'une ou l'autre des options volant ou plaque. On verra que l'on peut d'ailleurs les combiner.

Selon l'invention, on impose **toujours** une dérive **d**. L'angle de dérive **d** est défini comme étant l'angle formé entre la perpendiculaire **lc** à la « trajectoire » TJR de l'ensemble roulant (laquelle trajectoire est perpendiculaire, dans le sens de roulement du volant, à l'axe de rotation AR dudit volant) et l'axe du moyeu M. La dérive **d** apparaît sur la figure 3a comme étant bien l'angle entre la perpendiculaire **lc** à la trajectoire TRJ et la projection **pm** du moyeu M (ou M' si l'on impose un carrossage **c**).

La même définition serait évidemment valable, mutatis mutandis, en référence à une plaque.

De manière tout à fait préférée, la roue sera montée sur le volant ou la plaque selon un angle **d** « de dérive » de environ 5 à 10 et jusqu'à 40 ou 50°, les limites étant les limites pratiques des essais.

On simule ainsi l'une des conditions de virage. L'homme de métier sait que, en conditions de conduite normales, l'angle de dérive pour un conducteur également normal est au maximum de l'ordre de 3°. On dispose donc selon l'invention des moyens pour simuler des conditions extrêmes.

A noter que, si l'on n'imposait pas de dérive de roulage, le décoincement ne pourrait pas se produire, et ne serait alors possible que sous l'effet d'un choc violent, ce qui n'est pas l'objet de l'invention.

Selon l'invention, on peut aussi imposer un angle de carrossage **a.**

Dans le cas où l'on impose un tel angle de carrossage **a,** le moyeu est en M', et se trouve dans un plan PC perpendiculaire aux plans PR et PV, c'est-à-dire que les moyeux M et M' (avec carrossage **c)** se trouvent dans le même plan vertical PC.

La même définition serait évidemment valable, mutatis mutandis, en référence à une plaque.

L' angle de carrossage imposé sera de l'ordre de 2 à 5, 7 ou 10°. On peut donc également simuler ainsi des conditions extrêmes.

On pourra encore imposer éventuellement un angle de chasse de 0 à 3 ou 5° environ.

Enfm, l'homme de métier aura compris qu'il est extrêmement avantageux selon l'invention de combiner l'angle de dérive et l'angle de carrossage, et éventuellement l'angle de chasse, selon des combinaisons diverses, afin de simuler des conditions réalistes de virage de l'usage normal à extrême.

La vitesse de rotation du volant ou de défilement de la plaque se situe avantageusement dans une plage qui correspondrait à une vitesse d'avancement d'un véhicule qui ne peut pas être nulle mais peut être très faible, et dont la seule limite supérieure est celle imposée par le test, c'est-à-dire de l'ordre de 1 à 100, de préférence de 1 à 60, de préférence de 1 à 40, et enfin de préférence de 10 à 30 km/h, de préférence autour de 20 km/h ou essai normalisé 60 km/h
K Selon un mode de réalisation préféré, le volant est monté sur un axe de rotation fixe, et le moyeu de la roue remplit la fonction de moyen de compression, en ce sens qu'il peut être animé d'un « mouvement adapté » vers le bas (ou le haut) sous l'action d'une action extérieure, ce qui comprime l'aire de contact sur le volant (ou au contraire allège la pression).
L Selon un autre mode de réalisation de l'invention, le volant et le moyeu de roue sont montés mobiles en hauteur, et leurs « mouvements adaptés » coopèrent pour comprimer ou décomprimer la bande de roulement du pneumatique au niveau de la surface de contact bande/volant.
M Selon encore un mode de réalisation préféré, on dispose l'ensemble roulant R sur le volant V, et on dispose un second volant au dessus de l'ensemble roulant, ce second volant exerçant le « mouvement adapté », seul ou en coopération avec le premier volant, lorsque celui-ci est animé de son propre « mouvement adapté ».
N Selon d'autres modes de réalisation, on remplace le volant par une plaque, et on réalise les mêmes montages relatifs, *mutatis mutandis.*
O Selon encore une variante non limitative, on utilise un système de glissières comme décrit dans le mode statique, pour réaliser au moins une partie du « mouvement » adapté, éventuellement avec un profil spécial conduisant à des jeux de cinématiques particuliers.
P Comme pour le mode statique, on pourra combiner diversement les options non limitatives K à N ci-dessus, en fonction du vecteur EF à créer, lui-même défini par le cahier des charges de l'essai.
Q Dans tous les cas prévus ci-dessus, aussi bien le cas général que les options particulières, on pourra avantageusement prévoir, sur l'un des éléments volant, ensemble roulant, et/ou autre moyen de compression, notamment plaque, des systèmes capables d'appliquer un couple moteur ou freineur. Cette option est particulièrement avantageuse si elle est appliquée sur l'ensemble roulant, notamment le centre roue ou le moyeu M, car on peut alors simuler l'action et les effets de systèmes électroniques embarqués tels que ABS™, ESP™ (contrôle de trajectoire) et autres capteurs ou systèmes de capteurs.

Selon encore un mode de réalisation préféré, la surface de référence, notamment le volant ou la plaque, est en acier ou alliage et sa surface est lisse.

Il est toutefois préférable que sa surface soit telle qu'elle augmente le coefficient de frottement au niveau de l'aire de contact, et soit donc « adhérisée » (c'est-à-dire que l'on augmente le coefficient de frottement) par un revêtement (70) ou des stries ou rainures ou analogues.

Le procédé dynamique qui vient d'être décrit est le procédé qui donne, selon l'invention, la meilleure corrélation avec les tests sur véhicule sur route.

D'autres caractéristiques et avantages de l'invention seront mieux compris à la lecture de la description qui va suivre, et en se référant au dessin annexé sur lequel :
- la **figure 1** représente en coupe un pneumatique afin d'expliciter le vocabulaire utilisé dans la présente demande ; le modèle de pneumatique représenté n'est naturellement aucunement limitatif.
- la **figure 2** représente schématiquement les efforts de charge appliqués à un pneumatique et leurs composantes, ici encore afin de préciser la terminologie utilisée.
   La figure 2 se compose des figures :
   * 2a cas général.
   * 2b cas particulier où la composante normale est nulle.
   * 2c cas particulier où la composante longitudinale est nulle.
- la **figure 3** représente un mode de réalisation dynamique de l'invention, option « volant », et se compose des figures 3a (vue en perspective de la machine de test) et 3b (vue de dessus de la figure 3a).
- la **figure 4** représente également le mode de réalisation dynamique de l'invention, option plaque de roulement, et plus précisément plaque de roulement à lit d'air (ou gaz) comprimé.

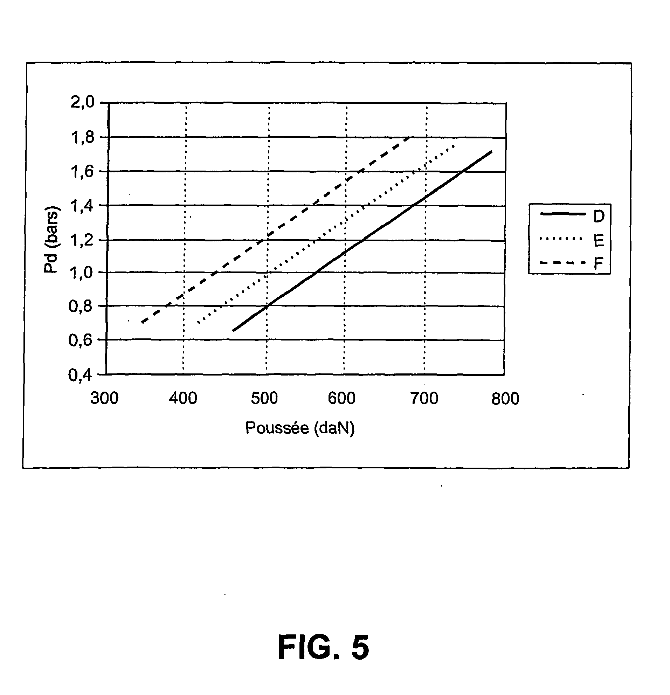

- la **figure 5** représente les résultats obtenus en essai dynamique selon l'invention.
- la **figure 6** représente une photographie d'essai dynamique selon l'invention prise exactement à l'instant où l'essai conduit au décoincement : on voit nettement l'air qui s'échappe de la cavité interne du pneumatique, en raison de la perte d'étanchéité. Le volant est recouvert d'une bande pour « adhériser » sa surface. On voit que, dans cette phase « ultime » de l'essai, c'est l'épaule et le flanc du pneumatique qui sont au contact du volant. Ceci est une des originalités de l'invention et probablement une des raisons de la remarquable corrélation des essais avec les essais réels sur piste ( 82%).

### Sur les figures annexées, les mêmes références ont les mêmes significations, qui sont les suivantes :

- 1: pneumatique
- 2: sommet du pneumatique'
- 3: bande de roulement
- 4: épaule du pneumatique
- 5: flanc du pneumatique
- 6: bourrelet ou talon du pneumatique
- 7: pointe du bourrelet ou talon 6
- 8: cavité interne
- A: point d'application de l'effort de charge
- P: plan horizontal tangent en A à la bande de roulement
- DR: direction de roulement
- N: composante normale de l'effort de charge
- T: composante transversale de l'effort de charge
- L: composante longitudinale de l'effort de charge
- t: composante tangentielle de l'effort de charge (résultante des vecteurs T et L, située dans le plan P)
- EF: effort de charge (résultante des vecteurs N, T et L).
- a: angle de carrossage
- d: angle de dérive
- TJR: trajectoire de l'ensemble roulant R
- lc: perpendiculaire à TJR
- R: ensemble roulant
- V: volant
- M: moyeu (ou axe du moyeu) de l'ensemble roulant
- M': moyeu (ou axe du moyeu) de l'ensemble roulant dans le cas où un carrossage a est imposé
- AR: axe de rotation du volant V
- A: un des points de contact entre ensemble roulant et surface de référence
- PV: plan contenant AR
- PR: plan contenant M
- PR': plan contenant M' (PR et PR' forment donc ensemble l'angle de carrossage a)
- PC: plan contenant M et M' (donc, perpendiculaire à PR et PV)
- VD: direction selon laquelle est considérée la figure 3a pour former la « vue de dessus » figure 3b
- 10: plaque microperforée
- 20: plaque pleine, au contact du pneumatique 1
- 60: ligne de contact entre la plaque 20 et le pneumatique 1
- 50: microperforations par lesquelles on injecte de l'AIR sous pression
- 30: intervalle entre les plaques 10 et 20
- 40: « film tendu » d'air.
- 70: bande (revêtement) d'augmentation du coefficient de frottement

L'invention sera mieux comprise à la lecture de la description qui va suivre, et des exemples non limitatifs ci-dessous.

### EXEMPLE I STATIQUE

### DECOINCEMENT SUR SOL CRANTE - MISE AU POINT D'UN TEST

### 24 / 65 -18 sur roue 9 J 18

### BUT.

Dans la première partie du test, les conditions nécessaires pour décoincer ces pneus rallye gonflés écrasés en statique sous effort « normal » ont été recherchées.

### METHODE.

### ⇒ Enveloppes :

Nous disposons de trois ensembles montés sur roue 9 J 18 attache centrale :
- le 1^{er} avec un pneu "tampon" réf. A pour la mise au point du test,
- le 2^{ème} un pneu témoin réf. B,
- le 3^{ème} un pneu dont les bourrelets ont été collés sur la roue avec une colle cyano-acrylique : réf. Pneumatique C.

### ⇒ Manipulation :

2 types de sols ont été retenus :
- une plaque à picots de hauteur 1.5 mm qui n'a pas permis de décoincer l'enveloppe tampon, mais sur laquelle nous avons fait des mesures de rigidité transversale,
- une plaque crantée de hauteur 5 mm.

Les efforts N et T sont limités à 2000 daN, les vitesses de la table et d'application de la charge sont en nombre limité :
- V table: = 50 et 200 mm/min. (V T)
- VN: = 50 mm/min.

Les conditions retenues pour permettre le décoinçage sont les suivantes :
- moyeu bloqué,
- carrossage et dérivé nuls,
- plaque crantée,
- charge N au départ 1000 daN,
- vitesse de déplacement table 50 mm/min.

### RESULTATS.

### ⇒Décoinçage.

Il n'a été possible de décoincer que sur la plaque crantée pour une charge N initiale de 1000 daN.

| **Enveloppe** | **Pression de départ en bar** | **Poussée daN** | **Pression au décoinçage bar** |
|---|---|---|---|
| **Pneumatique B Témoin** | 1.5 | 1650 | 1.82 |
| | 1.7 | 1700 | 2.11 |
| | 2.0 | 1850 | 2.30 |
| **Pneumatique C Collé** | 1.5 | 1790 | 1.83 |
| | 1.5 | 1910 | 1.83 |

### Remarque :

Un essai a été reconduit sur le pneu collé, à 180° du premier essai.
Pour une pression de départ de 1.5 bar, on obtient un écart de 12% en faveur du pneu collé.

### EXEMPLE II DYNAMIQUE

### DECOINCEMENT SUR SOL CRANTE - MISE AU POINT D'UN TEST

On se réfèrera pour cet exemple à la **figure 5** annexée et à la **figure 6** annexée.

### METHODE

### Décoinçage sous forte dérive

### BUT

Mesurer la poussée maximale, sous forte dérive, que l'ensemble monté peut supporter avant de décoincer à pression de gonflage imposée.

### DESCRIPTION :

### Préparation :

L'ensemble monté est appliqué, sous 30° de dérive et 6° de carrossage, sur le volant adhérisé en rotation à 2 km/h.
Effort T = 0
Effort N < 1500 daN
Effort t < 1000daN (évolue entre 200 et 1000 daN dans l'essai)

### Paramètres invariables :

Gaz de gonflage : air.
Type de pression : évolution libre pour 5 niveaux de 0.5, 0.75, 1.0, 1.25 et 1.5 bars.
Température ambiante entre 20 et 30°C.
Test dynamique en roulage sans chambre.

### Paramètres variables :

Roue du commerce (diamètre au siège ou « seat », largeur de jante, type de crochet).
Sens de montage (décoinçage en configuration AVG - avant gauche)

### RESULTATS

La pression au décoinçage PD en fonction de la poussée t de dérive et de carrossage (régression linéaire et graphe correspondant) est représentée sur la **figure 5** annexée pour trois pneumatiques différents de dimensions 225 / 60 ZR 15, référencés D, E, F.
Le pneumatique le plus performant est celui dont la pression au décoinçage est la plus faible, c'est-à-dire le pneumatique D.

### Conclusions des essais:

Dans 82 % des cas, l'écart entre le test machine et le test véhicule est inférieur en valeur à 0.1 bar, ce qui représente, comme le comprendra l'homme de métier, une corrélation extrêmement supérieure aux méthodes de l'art antérieur.

L'invention couvre également tous les modes de réalisation et toutes les applications qui seront directement accessibles à l'homme de métier à la lecture de la présente demande, de ses connaissances propres, et éventuellement d'essais simples de routine.

## Revendications

1. Procédé pour test de décoinçage d'un ensemble monté comportant une jante, un pneumatique sans chambre, la cavité interne du pneumatique étant gonflée à une pression donnée, selon lequel on exerce sur machine d'essai un effort sur le pneumatique jusqu'à ce que se produise le début du décoinçage du pneumatique, au niveau du bourrelet du pneumatique et relève l'effort appliqué et la pression de la cavité interne du pneumatique, **caractérisé en ce qu'**on ne transmet, sur machine, les efforts d'essai (EF) que selon une direction dénommée normale, par la bande de roulement.

2. Procédé selon la revendication 1 **caractérisé en ce que**, en fin d'essai extrême l'épaule et ultimement le flanc du pneumatique viennent en contact avec la surface d'essai, fugacement et juste avant l'instant du décoinçage.

3. Procédé selon l'une quelconque des revendications 1 à 2 **caractérisé en ce que** le début de décoinçage est détecté par le sifflement audible de l'air qui s'échappe de la cavité interne du pneumatique.

4. Procédé selon l'une quelconque des revendications 1 à 2 **caractérisé en ce que** on enregistre en continu, et y compris au delà du point de début de décoinçage, l'effort appliqué et la pression de gonflage.

5. Procédé selon l'une quelconque des revendications 1 à 4 **caractérisé en ce que** l'effort (EF) s'exerce sur le sommet de la bande de roulement et présente au moins une composante tangentielle (t) non nulle.

6. Procédé selon l'une quelconque des revendications 1 à 5 **caractérisé en ce que** la composante normale (N) est nulle, ce qui correspond à un coefficient de frottement pneumatique/surface d'essai rendu artificiellement infmi.

7. Procédé selon l'une quelconque des revendications 1 à 6 **caractérisé en ce que** la composante tangentielle (t) se confond, les composantes longitudinale (L) et normale (N) étant nulles, avec la composante transversale (T).

8. Procédé selon l'une quelconque des revendications 5 à 7 **caractérisé en ce que** la composante longitudinale (L) n'est pas nulle et on prévoit d'appliquer sur la roue et/ou son moyeu un couple moteur ou freineur.

9. Procédé selon l'une quelconque des revendications 1 à 9 **caractérisé en ce que** on opère selon un procédé statique selon lequel l'ensemble roulant est disposé sur une surface d'essai de référence et subit un effort normal d'essai (EF), appliqué sur le sommet de la bande de roulement, par au moins un moyen de compression.

10. Procédé selon l'une quelconque des revendications 5 à 9 **caractérisé en ce que** on utilise comme surface une plaque augmentant le coefficient de frottement entre la bande de roulement du pneumatique et ladite surface.

11. Procédé selon l'une quelconque des revendications 1 à 9 **caractérisé en ce que** on opère en mode dynamique selon lequel on applique l'effort normal (EF) en faisant rouler l'ensemble roulant (R) sur une surface de référence et en imposant une dérive (d) par rapport à ladite surface de référence.

12. Procédé selon la revendication 11 **caractérisé en ce que** on positionne et on fait rouler l'ensemble roulant (R) sur un volant (V) qui consiste en un cylindre entraîné en rotation qui sert de surface de référence pour l'application du mouvement adapté.

13. Procédé selon la revendication 12 **caractérisé en ce que** on combine une plaque de roulage simple et une plaque à film tendu d'air destinée à appliquer le mouvement adapté.

14. Procédé selon l'une quelconque des revendications 12 ou 13 **caractérisé en ce que** l'ensemble roulant (R) est monté sur le volant ou la plaque selon un angle (d) de dérive de environ 5 à 10 et jusqu'à 40 ou 50°.

15. Procédé selon l'une quelconque des revendications 12 à 14 **caractérisé en ce que** on impose de plus un angle de carrossage (a) de l'ordre de 2 à 5, 7 ou 10°.

16. Procédé selon l'une quelconque des revendications 12 à 15 **caractérisé en ce que** on impose de plus un angle de chasse de 0 à 3 ou 5°.

17. Machine pour essai de décoinçage de pneumatique, **caractérisée en ce que** ladite machine est adaptée à ne transmettre les efforts d'essai (EF) que selon une direction dénommée normale, par la bande de roulement du pneumatique destinée à être en contact avec la surface d'essai, et **en ce que** elle comporte des moyens de détection de l'instant du décoinçage et des moyens pour enregistrer en continu l'effort appliqué et la pression de gonflage.

18. Machine selon la revendication 17 **caractérisé en ce que** on positionne et on fait rouler l'ensemble roulant (R) sur un volant (V) qui consiste en un cylindre entraîné en rotation qui sert de surface de référence pour l'application du mouvement adapté.

19. Machine selon la revendication 17 **caractérisée en ce que** on fait rouler l'ensemble roulant (R) sur une surface plane d'une plaque.

20. Machine selon la revendication 19 **caractérisée en ce que** ladite plaque est formée d'une première plaque (10) fixe et microperforée, comportant un très grand nombre de microperforations (50) dans lesquelles on injecte de l'air ou un gaz inerte sous pression, et d'une second plaque pleine (20), qui est mobile en défilement et est au contact du pneumatique (1) par la ligne de contact (60), les deux plaques (10 et 20) étant montées de telle sorte qu'il subsiste un intervalle (30) entre elles, où peut s'établir un film tendu d'air, et **en ce qu'** on exerce sur le sommet de la bande de roulement du pneumatique (1) une pression grâce à la pression de l'air, qui se transmet à la plaque (20) par le film tendu, ce qui réalise un mouvement adapté recherché, tout en réalisant un roulage du pneumatique sur la face inférieure de la plaque (20).

## Claims

1. A process for the unseating test for a mounted assembly comprising a rim, a tyre without an inner-tube ("tubeless"), the inner cavity of the tyre being inflated to a given pressure, of the type in which, on the testing machine, a force is exerted on the tyre until unseating of the tyre begins, at the bead of the tyre, and the force applied and the pressure of the inner cavity of the tyre are noted, **characterised in that,** on the machine, the test forces EF are transmitted only in a direction referred to as "normal", by the tread.

2. A process according to Claim 1, **characterised in that**, at the end of the extreme test the "shoulder" and ultimately the "sidewall" of the tyre come into contact with the test surface, fleetingly and just before the moment of unseating.

3. A process according to any one of Claims 1 to 2, **characterised in that** the start of the unseating (or moment of unseating) is detected by the audible hissing of the air escaping from the inner cavity of the tyre.

4. A process according to any one of Claims 1 to 2, **characterised in that** the force applied and the inflation pressure are recorded continuously, including beyond the starting point of unseating.

5. A process according to any one of Claims 1 to 4, **characterised in that** the force EF is exerted on the crown of the tread and has at least one tangential component t other than zero.

6. A process according to any one of Claims 1 to 5, **characterised in that** the normal component N is zero, which corresponds to a coefficient of tyre/test surface friction rendered artificially infinite.

7. A process according to any one of Claims 1 to 6, **characterised in that**, the longitudinal L and normal N components being zero, the tangential component t is merged with the transverse component T.

8. A process according to any one of Claims 5 to 7, **characterised in that** the longitudinal component L is not zero and provision is made to apply a driving or braking torque to the wheel and/or its hub.

9. A process according to any one of Claims 1 to 9, **characterised in that** operation is using a static process according to which the rolling assembly is arranged on a reference test surface and is subjected to a normal test force EF, applied to the crown of the tread, by at least one compression means.

10. A process according to any one of Claims 5 to 9, **characterised in that** the surface used is a plate increasing the coefficient of friction between the tread of the tyre and said surface.

11. A process according to any one of Claims 1 to 9, **characterised in that** operation is in dynamic mode in which the normal force EF is applied by causing the rolling assembly R to roll on a reference surface and by imposing a drift d relative to said reference surface.

12. A process according to Claim 11, **characterised in that** the rolling assembly R is positioned and caused to roll on a test drum V which consists of a cylinder driven in rotation which acts as a reference surface for the application of the "suitable movement".

13. A process according to Claim 12, **characterised in that** a simple rolling plate and a strained-air film plate intended to apply the "suitable movement" are combined.

14. A process according to any one of Claims 12 or 13, **characterised in that** the rolling assembly R is mounted on the test drum or the plate at a drift angle d of approximately 5 to 10 and up to 40 or 50°.

15. A process according to any one of Claims 12 to 14, **characterised in that** furthermore a camber angle a of the order to 2 to 5, 7 or 10° is imposed.

16. A process according to any one of Claims 12 to 15, **characterised in that** furthermore a caster angle of 0 to 3 or 5° is imposed.

17. A machine for a tyre unseating test, **characterised in that** said machine transmits the test (or "load") forces EF only in a direction referred to as "normal", by the tyre tread intended to be in contact with the test surface, and **in that** it comprises means for detecting the moment of unseating and means for continuously recording the force applied and the inflation pressure.

18. A machine according to Claim 17, **characterised in that** the rolling assembly R is positioned and caused to roll on a test drum V which consists of a cylinder driven in rotation which acts as a reference surface for the application of the "suitable movement".

19. A machine according to Claim 17, **characterised in that** the rolling assembly R is caused to roll on a plane surface of a plate.

20. A machine according to Claim 19, **characterised in that** said plate is formed of a first microperforated fixed plate 10 (upper, in the convention used), comprising a very large number of microperforations 50 into which air (or an inert gas) is injected under pressure, and a second solid plate 20, which is displaceable and is in contact with the tyre 1 by the contact line 60, the two plates 10 and 20 being mounted such that there is a gap 30 between them, where a "strained film" of air may be produced, and **in that** a pressure is exerted on the crown of the tread of the tyre 1 thanks to the pressure of the air, which is transmitted to the plate 20 by the strained film, which effects the desired "suitable movement", while effecting rolling of the tyre on the lower face of the plate 20.

## Patentansprüche

1. Verfahren zum Prüfen des Ablösens einer montierten Einheit, die eine Felge und einen schlauchlosen Luftreifen aufweist, wobei der Innenhohlraum des Luftreifens auf einen gegebenen Druck aufgepumpt ist, gemäß dem auf einer Prüfmaschine eine Kraft auf den Luftreifen ausgeübt wird, bis der Beginn des Ablösens des Luftreifens in Höhe des Wulsts eintritt, und die angewendete Kraft und der Druck des Innenhohlraums des Luftreifens erfasst werden, **dadurch gekennzeichnet, dass** auf der Maschine die Prüfkräfte (EF) nur gemäß einer sogenannten normalen Richtung durch den Laufstreifen übertragen werden.

2. Verfahren nach Anspruch 1, **dadurch gekennzeichnet, dass** am Ende einer Extremprüfung die Schulter und letztlich die Flanke des Luftreifens flüchtig und kurz vor dem Moment des Ablösens mit der Prüffläche in Kontakt kommen.

3. Verfahren nach einem der Ansprüche 1 bis 2,
**dadurch gekennzeichnet, dass** der Beginn des Ablösens durch das hörbare Pfeifen der Luft erfasst wird, die aus dem Innenhohlraum des Luftreifens austritt.

4. Verfahren nach einem der Ansprüche 1 bis 2,
**dadurch gekennzeichnet, dass** durchgehend, und einschließlich über den Punkt des Beginns des Ablösens hinaus, die angewendete Kraft und der Reifenfülldruck aufgezeichnet werden.

5. Verfahren nach einem der Ansprüche 1 bis 4,
**dadurch gekennzeichnet, dass** die Kraft (EF) am Scheitel des Laufstreifens ausgeübt wird und mindestens eine Tangentialkomponente (t) ungleich Null aufweist.

6. Verfahren nach einem der Ansprüche 1 bis 5,
**dadurch gekennzeichnet, dass** die Normalkomponente (N) Null ist, was einem Reibungskoeffizient Luftreifen/Prüffläche entspricht, der künstlich unendlich gemacht wird.

7. Verfahren nach einem der Ansprüche 1 bis 6,
**dadurch gekennzeichnet, dass,** wenn die Längskomponente (L) und die Normalkomponente (N) Null sind, die Tangentialkomponente (t) mit der Querkomponente (T) zusammenfällt.

8. Verfahren nach einem der Ansprüche 5 bis 7,
**dadurch gekennzeichnet, dass** die Längskomponente (L) ungleich Null ist und vorgesehen wird, auf das Rad und/oder seine Nabe ein Antriebs- oder Bremsmoment anzuwenden.

9. Verfahren nach einem der Ansprüche 1 bis 8,
**dadurch gekennzeichnet, dass** gemäß einem statischen Verfahren vorgegangen wird, gemäß dem die rollende Einheit auf einer Bezugsprüffläche angeordnet wird und eine normale Prüfkraft (EF) erfährt, die auf den Scheitel des Laufstreifens durch mindestens eine Komprimierungseinrichtung angewendet wird.

10. Verfahren nach einem der Ansprüche 5 bis 9,
**dadurch gekennzeichnet, dass** als Fläche eine Platte verwendet wird, die den Reibungskoeffizient zwischen dem Laufstreifen des Luftreifens und der Fläche erhöht.

11. Verfahren nach einem der Ansprüche 1 bis 9,
**dadurch gekennzeichnet, dass** in einer dynamischen Betriebsart vorgegangen wird, gemäß der die normale Kraft (EF) angewendet wird, indem die rollende Einheit {R) auf einer Bezugsfläche gerollt wird und indem eine Drift (d) bezüglich der Bezugsfläche vorgegeben wird.

12. Verfahren nach Anspruch 11, **dadurch gekennzeichnet, dass** die rollende Einheit (R) auf einem Schwungrad (V) positioniert und gerollt wird, das aus einem in Drehung versetzten Zylinder besteht, der als Bezugsfläche für die Anwendung der geeigneten Bewegung dient.

13. Verfahren nach Anspruch 12, **dadurch gekennzeichnet, dass** eine einfache Rollplatte und eine Platte mit gespanntem Luftfilm kombiniert werden, die dazu bestimmt ist, die geeignete Bewegung anzuwenden.

14. Verfahren nach einem der Ansprüche 12 oder 13, **dadurch gekennzeichnet, dass** die rollende Einheit (R) auf das Schwungrad oder die Platte gemäß einem Driftwinkel (d} von etwa 5 bis 10 und bis zu 40 oder 50° montiert wird.

15. Verfahren nach einem der Ansprüche 12 bis 14, **dadurch gekennzeichnet, dass** außerdem ein Radsturzwinkel (a) der Größenordnung von 2 bis 5, 7 oder 10° vorgegeben wird.

16. Verfahren nach einem der Ansprüche 12 bis 15, **dadurch gekennzeichnet, dass** außerdem ein Nachlaufwinkel von 0 bis 3 oder 5° vorgegeben wird.

17. Maschine zur Ablösungsprüfung eines Luftreifens, **dadurch gekennzeichnet, dass** die Maschine geeignet ist, um die Prüfkräfte (EF) nur gemäß einer als normal bezeichneten Richtung durch den Laufstreifen des Luftreifens zu übertragen, der dazu bestimmt ist, mit der Prüffläche in Kontakt zu sein, und dass sie Einrichtungen zur Erfassung des Moments des Ablösens und Einrichtungen aufweist, um durchgehend die angewendete Kraft und den Reifenfülldruck aufzuzeichnen.

18. Maschine nach Anspruch 17, **dadurch gekennzeichnet, dass** die rollende Einheit (R) auf einem Schwungrad (V) positioniert und gerollt wird, das aus einem in Drehung versetzten Zylinder besteht, der als Bezugsfläche für die Anwendung der geeigneten Bewegung dient.

19. Maschine nach Anspruch 17, **dadurch gekennzeichnet, dass** die rollende Einheit (R) auf einer ebenen Fläche einer Platte gerollt wird.

20. Maschine nach Anspruch 19, **dadurch gekennzeichnet, dass** die Platte aus einer ersten festen und mikroperforierten Platte (10), die eine sehr große Anzahl von Mikroperforierungen (50) aufweist, in die Luft oder ein Inertgas unter Druck injiziert wird, und aus einer zweiten massiven Platte (20) besteht, die durchlaufbeweglich ist und mit dem Luftreifen (1) über die Kontaktlinie (60) in Kontakt steht, wobei die zwei Platten (10 und 20) so montiert sind, dass ein Zwischenraum (30) zwischen ihnen bleibt, in dem sich ein gespannter Luftfilm aufbauen kann, und dass auf den Scheitel des Laufstreifens des Luftreifens (1) ein Druck aufgrund des Luftdrucks ausgeübt wird, der sich über den gespannten Film auf die Platte (20) überträgt, wodurch eine gewünschte geeignete Bewegung und gleichzeitig ein Rollen des Luftreifens auf der Unterseite der Platte (20) ausgeführt werden.
